(19) Europäisches Patentamt

European Patent Office

Office européen des brevets

(11) **EP 1 092 883 A2**

(12) **EUROPEAN PATENT APPLICATION**

(43) Date of publication:
**18.04.2001 Bulletin 2001/16**

(51) Int. Cl.[7]: **F16C 23/08**

(21) Application number: **00101418.2**

(22) Date of filing: **25.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.09.1999 JP 27424999**

(71) Applicant: **MINEBEA CO., LTD.**
**Kitasaku-gun, Nagano-ken (JP)**

(72) Inventors:
• **Shoji, Akira,**
**c/o Minebea Co., Ltd, Karuizawa**
**Kitasaku-gun, Nagano-ken (JP)**

• **Akao, Shinichi,**
**c/o Minebea Co., Ltd, Karuizawa**
**Kitasaku-gun, Nagano-ken (JP)**
• **Sasaki, Gen,**
**c/o Minebea Co., Ltd, Karuizawa**
**Kitasaku-gun, Nagano-ken (JP)**

(74) Representative:
**Patentanwälte**
**Schaad, Balass, Menzl & Partner AG**
**Dufourstrasse 101**
**Postfach**
**8034 Zürich (CH)**

(54) **Self-aligning roller bearing**

(57)   To provide a retainerless self-aligning roller bearing, in a self-aligning roller bearing in which concave rollers 5 are arranged between a spherical orbit of an inner race 2 and two rows of convex orbits of an outer race 4, the concave rollers 5 in each row are compactly arranged in contact with each other to thereby dispense with an expensive retainer that has been conventionally required and to thereby increase the number of the concave rollers 5 to enhance the load bearing performance.

Fig. 2

**Description**

BACKGROUND OF THE INVENTION

1. Field of The Invention

The present invention relates to a self-aligning roller bearing having a self-aligning function.

2. Description of The Related Art

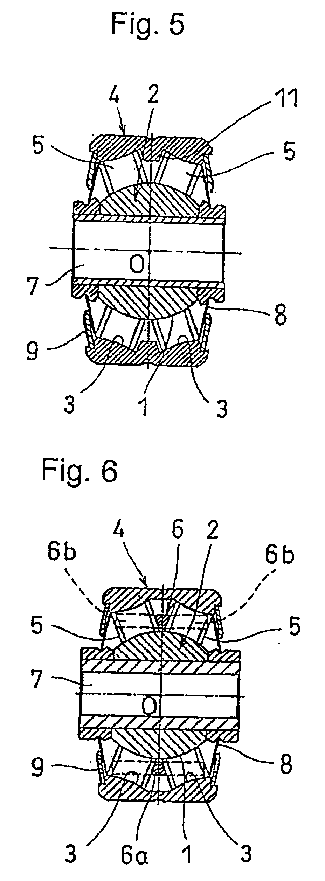

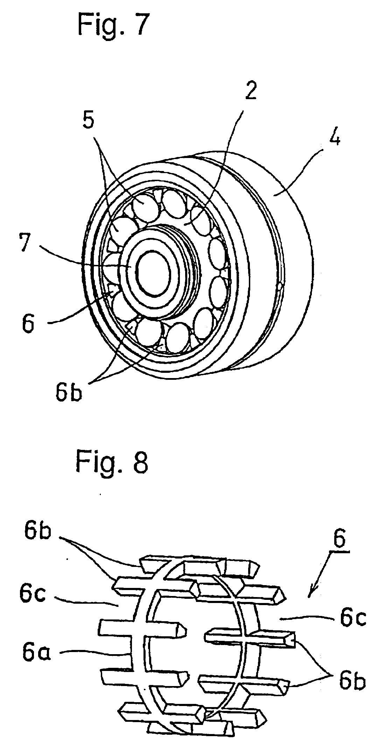

For instance, as shown in Figs. 6 and 7, a self-aligning roller bearing is provided with an inner race 2 having a single spherical orbit 1 and an outer race 4 having two convex orbits 3. A plurality of hourglass shaped concave rollers 5 are disposed in two rows between the above-described spherical orbit 1 and the convex orbits 3. The concave rollers 5 (hereinafter simply referred to as rollers) on each row are arranged equidistantly in the circumferential direction by a retainer 6. In such a self-aligning roller bearing, the center of the spherical orbit 1 of the inner race 2 is identified with a bearing center O. Even if the axes of the inner race 2 and the outer race 4 are inclined, it is possible to obtain a stable rotation.

Incidentally, in the self-aligning roller bearing shown, a sleeve 7 is fitted in and fixed to the inner race 2 and at the same time a seal means composed of a seal 8 and a shield 9 is interposed between the sleeve 7 and the outer race 4 to form a unity assembly. However, it goes without saying that there are cases that these components are used as an individual component without forming the unity assembly.

Also, another type of a self-aligning roller bearing in which a spherical orbit and two rows of concave orbits are provided on the outer race and the inner race, respectively, and barrel-shaped spherical rollers are arranged between the confronting orbits (for example, see Japanese Patent Application Laid-Open No. Hei 9-317760 and Japanese Patent Application Laid-Open No. Hei 8-128450) has the same function as that of the bearing shown above.

By the way, as shown in Fig. 8, it is conventionally general that the above-described retainer 6 is shaped such that a plurality of pillar portions 6b thereof extend like teeth of comb from both sides of a ring portion 6a in both directions of the axial direction so that pockets 6c between the adjacent pillar portions 6b may be used as retainer portions of the rollers 5. Then, conventionally, such a retainer 6 is cast into one piece and thereafter is finished by machining. However, it is necessary to use expensive molds for casting because its shape is complicated, and it is likely that the casting default occurs. Thus, there is a problem that the retainer per se is expensive, which inevitably leads the cost of the overall bearing to be high.

Incidentally, in some cases, the retainer is divided into the right and left parts and the halves are punched out of a steel plate (for example, see the above-described Japanese Patent Application Laid-Open No. Hei 8-128450). In this case, the number of the components is increased and at the same time the number of the assembling steps is increased so that the cost could not be reduced so much.

SUMMARY OF THE INVENTION

Accordingly, in view of the above-noted defect inherent in the prior art, an object of the present invention is to provide a self-aligning roller bearing which makes it possible to omit an expensive retainer to thereby largely contribute to reduction of the cost.

In order to attain the above other objects, according to the present invention, a self-aligning roller bearing in which two rows of rollers are arranged between orbits of an inner race and an outer race, is characterized in that rollers of each row are arranged compactly.

In such a self-aligning roller bearing, since the rollers are arranged compactly, the retainer for arranging the rollers equidistantly in the circumferential direction may be dispensed with. Corresponding to this, the cost reduction may be attained.

According to the present invention, a ring may be interposed between the rows of rollers or an annular projection for separating the two rows of rollers may be provided on at least either of the outer or inner races having two rows of orbits. In this case, since the ring or the annular projection functions as a separation means for separating the rollers into two rows, the assembling work of the rollers is facilitated.

The present invention may be applied to any type of self-aligning mechanisms. For example, it is possible to apply the invention to so-called concave roller type in which, as shown in Figs. 6 and 7, a spherical orbit 1 and two rows of convex orbits 3 are provided on the inner race 2 and the outer race 4, respectively, and hourglass shaped concave rollers 5 are arranged between these orbits or a so-called spherical roller type in which, as shown in each of the foregoing Japanese Publications, the spherical orbit and the two rows of the concave orbits are arranged on the outer race and the inner race, respectively, and a barrel-shaped spherical rollers are arranged between these orbits.

BRIEF DESCRIPTION OF THE DRAWINGS

In the accompanying drawings:

Fig. 1 is a cross-sectional view showing a structure of a self-aligning roller bearing in accordance with a first embodiment of the present invention;
Fig. 2 is a plan view showing the structure of the self-aligning roller bearing;
Fig. 3 is a perspective view showing the structure of the self-aligning roller bearing;

Fig. 4 is a cross-sectional view showing a structure of a self-aligning roller bearing in accordance with a second embodiment of the present invention;

Fig. 5 is a cross-sectional view showing a structure of a self-aligning roller bearing in accordance with a third embodiment of the present invention;

Fig. 6 is a cross-sectional view showing a structure of a conventional self-aligning roller bearing;

Fig. 7 is a perspective view showing the structure of the conventional self-aligning roller bearing; and

Fig. 8 is a perspective view showing a retainer which has been used in the conventional self-aligning roller bearing.

DESCRIPTION OF THE PREFERRED EMBODIMENTS

An embodiment of the present invention will now be described with reference to the accompanying drawings.

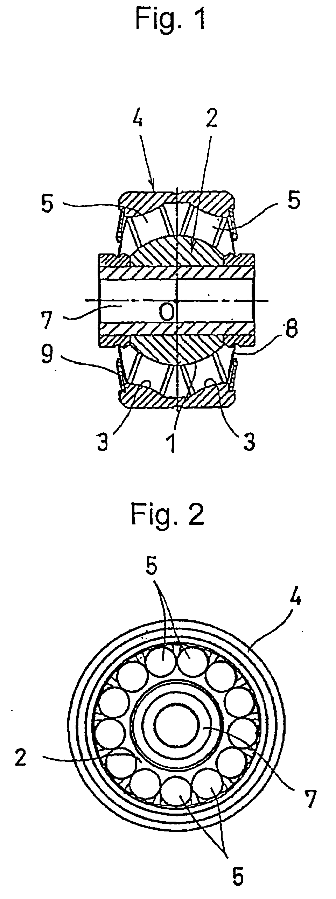

Figs. 1 to 3 show a self-aligning roller bearing if in accordance with a first embodiment of the present invention. Incidentally, since the overall structure of the bearing is the same as that of a concave roller type self-aligning roller bearing shown in Figs. 6 and 7 except for a point that the retainer 6 is dispensed with, the same reference numerals are used to indicate the like parts and the duplicated explanation will be omitted. In the first embodiment of the present invention, two rows of rollers (concave rollers) 5 disposed between a spherical orbit 1 of an inner race 2 and two convex orbits 3 of an outer race 4 are compactly arranged in contact with each other, whereby a retainer 6 (shown in Figs. 6 to 8) which has been conventionally required to arrange the rollers 5 equidistantly in the circumferential direction may be omitted.

In such a self-aligning bearing, the expensive retainer 6 which has been conventionally required may be omitted because the rollers 5 are compactly arranged. Corresponding to this omission, the cost reduction may be achieved.

On the other hand, since the rollers 5 are arranged compactly, the number of the rollers 5 in each row is increased in comparison with the conventional case. Corresponding to this increment, the load bearing performance is enhanced in comparison with the conventional case. Incidentally, in the case where the same primary dimension is taken, the number of the rollers 5 in the embodiment of the present invention is thirteen, whereas the number of the rollers 5 of the conventional bearing (Figs. 6 and 7) having the retainer 6 is eleven.

A durable load limit SLR of a bearing is given by the following formula according to MILL-HDBK-1599:

$$SLR = 12,000\,NDL\cos\alpha$$

where N is the number of the rollers, D is the average diameter of the rollers, L is the contact length of the rollers, and $\alpha$ is the roller contact angle.

In this case, assuming that the same primary dimension including the above-described N, D, L and $\alpha$ is taken for both the bearing according to the embodiment and the conventional bearing, the durable load limit SLR according to the embodiment is increased by about 18% (13/11) relative to the durable load limit SLR of the conventional bearing and is superior in load bearing performance.

Incidentally, in accordance with the embodiment of the invention, it would be thought that the bearing would have a disadvantage in rotational torque because the rollers 5 are rotated in contact with each other in the same direction. However, in view of the fact that there is a frictional contact between the retainer and the rollers in the conventional bearing, this does not cause any serious problem and in the case where the bearing is used as an intermediate or low speed type one, there is no problem at all.

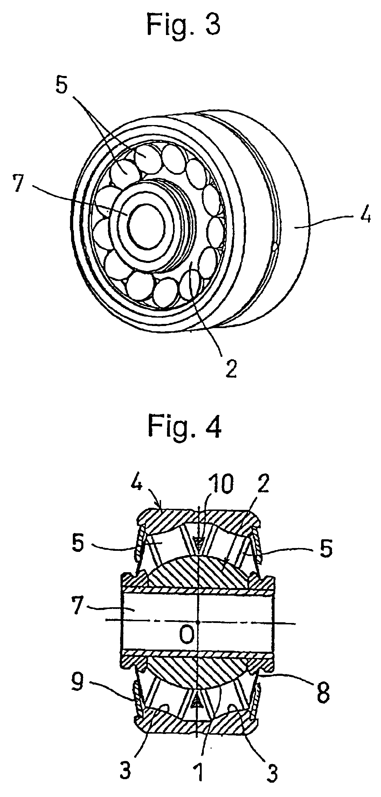

Fig. 4 shows a self-aligning roller bearing in accordance with a second embodiment of the present invention. The second embodiment of the invention is characterized in that a ring 10 is interposed between the rollers 5 arranged in two rows. Here, the ring 10 is in the form of a triangular shape corresponding to an opening angle of the right and left rollers and its inner diameter is set to be slightly larger than an outer diameter of the inner race 2. Such a ring 10 is arranged between the inner race 2 and the outer race 4 in advance so that the ring 10 functions as a separation means for separating the rollers 5 into two rows to facilitate the assembling work of the rollers 5.

Fig. 5 shows a self-aligning roller bearing in accordance with a third embodiment of the present invention. The third embodiment of the invention is characterized in that an annular projection 11 for separating the two rows of rollers 5 is provided in the middle, in the axial direction, of the inner circumferential surface of the outer race 4 instead of the ring 10 according to the second embodiment. According to the third embodiment of the invention, in the same manner as of the ring 10 in accordance with the above-described second embodiment, the annular projection 11 functions as the separation means for separating the rollers 5 into two rows to ensure the like effect. However, since the annular projection 11 is provided integrally with the outer race 4, the rollers 5 may be directly assembled, which is advantageous in cost in addition to the reduction of the number of the components.

As described above, in the self-aligning roller bearing according to the present invention, since the expensive retainer may be dispensed with, it is possible to reduce the overall cost. Also, corresponding to the omission of the retainer, it is possible to increase the number of the rollers to thereby enhance the load bearing performance.

Various details of the invention may be changed without departing from its spirit nor its scope.

Furthermore, the foregoing description of the embodiments according to the present invention is provided for the purpose of illustration only, and not for the purpose of limiting the invention as defined by the appended claims and their equivalents.

## Claims

1. A self-aligning roller bearing in which two rows of rollers are arranged between orbits of an inner race and an outer race, comprising an improvement in which the rollers in each row are arranged compactly.

2. The self-aligning roller bearing according to claim 1, wherein a ring is interposed between the rows of rollers.

3. The self-aligning roller bearing according to claim 1, wherein an annular projection for separating the two rows of rollers is provided on at least either of the outer or inner races having two rows of orbits.

# Fig. 1

# Fig. 2

Fig. 3

Fig. 4

## Fig. 5

## Fig. 6

## Fig. 7

## Fig. 8